# EUROPEAN PATENT APPLICATION

(11) **EP 1 734 289 A2**
(43) Date of publication of application: **20.12.2006**
(21) Application number: 06290936.1
(22) Date of filing: 08.06.2006
(51) Int. Cl.: F16H 48/16

(54) **Transmission mechanism for equalized management of the traction force provided for traction wheels of automotive vehicles**

(30) Priority: 15.06.2005 BR PI0502387
(71) Applicant: Larin, Hector Oscar, 13240-000 km. 63,5 Jarinu SP (BR); de Azevedo, Kaiser Salvador, 05022-011 Sao Paulo (BR)
(72) Inventor: Larin, Hector Oscar, Jarinu, Sao Paulo 13240-000 (BR)
(74) Representative: Hammond, William

(57) **Abstract**

"TRANSMISSION MECHANISM FOR EQUALIZED MANAGEMENT OF THE TRACTION FORCE PROVIDED FOR TRACTION WHEELS OF AUTOMOTIVE VEHICLES", which comprises a outermost tubular framework (1), which is provided with a face wheel (2) assembled on the periphery of one of its lateral ends; internally, the framework (1) receives an assembly of a pair of cubes (3) provided with semicircular cavities aligned towards its longitudinal axle, each one being mechanically attached to its respective semi shaft (4), which is attached to its respective traction wheel; the semi shafts (4) are components that enter the framework (1) of the set through the side apertures (5) provided in the referred framework; the cubes (3) are aligned in a coaxial fashion inside the framework (1); each of the cubes (3) receives a set of casters (6), being the set of casters (6) of the two cubes (3) retained between a pair of components named housings (7); housings (7) are essentially tubular parts and are assembled around cubes (3) and those receive the oriented assembly of the casters (6).

## Description

The present patent of Invention Priority describes a transmission mechanism for equalized management of the traction force provided for traction wheels of automotive vehicles; such mechanism constitutes an alternative to differential gear mechanisms generally applied in traction shafts of automotive vehicles in general and presents a series of advantages if compared to said differential gears.

As it is known in the art, a differential gear is a mechanical set of gears which, in automotive vehicles, allows the propulsion or transmission shaft to turn the traction wheels in different speeds, thus being useful in routes where the vehicle draws a curve to either side, once during the curve the traction wheel turned to the curve interior tends to turn in a relatively slower speed than the one presented by the wheel that is positioned at the outer side of the curve. The differential gear thus allows the traction shaft not to experience any sort of torsion when the vehicle enters a curve.

Briefly, the differential set consists of a gear box, generally round shaped; which is located in the core of the traction shafts (semi shafts).

A cardan shaft from the gear box is connected to the differential gear by its front or rear face (depending on the vehicle embodiment), wherein one of the side faces of said set split the semi shafts towards each of the traction wheels.

The differential gear is provided with a pinion gear, assembled by grooves on transmission gear end, pivoting a conical gear also known as face wheel, which is connected to one of the semi shaft tips of the wheels.

The face wheel, in its structure, is provided with a pair of gears named pinion gears, which actuate gears named satellite gears.

At the moment the vehicle enters a curve, the difference of rotations between the wheel that is innermost at the curve and the wheel that is outermost at the curve is transferred to the set of gears assembled in the interior of the differential gear.

The differential gear presents a series of advantages; all of them concerning to the fact it operates in a generally safe and efficient way in most conditions.

The only basic inconvenience of the differential gears is the fact that, for the transmission of force from motor to the wheels to occur, both wheels of the same shaft must contact directly the ground in order to obtain enough friction to allow the vehicle to move.

In case one of the wheels loses contact with the ground, either by falling in a hole or by losing adherence over a slippery surface, the motor force of the vehicle is obligatorily directed to this wheel which starts to turn in vain.

Transferring the motor force to the wheel that is turning in vain draws traction off the other wheel that may be over firm ground, stopping the vehicle.

This negative feature is related to the construction philosophy of the conventional differential gear or, in other words, the same solution that effectively actuates in order to allow the wheels of the same traction shaft to turn with different speeds during a curve is responsible for transferring all the traction to the wheel that eventually loses contact with the ground or is over slippery ground.

In face of such inconvenience, the transmission mechanism for the equalized management of the traction force provided for the traction wheels of automotive vehicles that is object of this patent of invention priority was developed, which operates in a manner that is totally different from the conventional differential gears and presents a construction form that avoids the effect of losing traction whenever one of the wheels of a traction shaft loses contact with the ground or is over slippery ground.

In face of this context, the present transmission mechanism for equalized management of the traction force provided for the traction wheels of automotive vehicles was developed, which aims to allow a vehicle equipped with it to be able to keep in motion even if one of the wheels loses contact with the ground, or is over slippery ground, technical advantage obtained through a mechanic system that allows the existence of a relative blocking among the components of the mechanism.

The transmission mechanism for equalized management of the traction force provided for the traction wheels of automotive vehicles that is object of this patent of invention priority will be described in detail with reference to the below mentioned drawings, in which:
Fig. 1 illustrates a schematic exploded view of the mechanism object of this patent of invention priority;
Fig. 2 illustrates a lateral, partially sectional view of the mechanism of the invention;
Fig. 3 illustrates a transversal sectional view of the mechanism of the invention, allowing the perfect understanding of its constructiveness;
Fig. 4 illustrates another sectional view of the mechanism of the invention, being said sectional view arranged so as to illustrate the movement of the components of the mechanism;
Fig. 5 illustrates a perspective view of the mechanism set duly assembled;
Figs. 6 and 7 illustrate schematically sectional views picturing a variation of the mechanism embodiment presented in Figs. 1 to 5, which is particularly aimed for light vehicles and passenger cars, said Figs. 6 and 7 present blown up details; and
Fig. 8 illustrates a perspective exploded view of the spring system used in the variation pictured in Figs. 6 and 7.

According to the figures above related, the transmission mechanism for equalized management of the traction force provided for the traction wheels of automotive vehicles that is object of this patent of invention priority comprises an outermost tubular framework 1, which is provided with a face wheel 2 assembled on the periphery of one of its lateral ends.

Internally, the framework 1 receives an assembly of a pair of cubes 3 provided with semicircular cavities aligned towards its longitudinal axle, each one being mechanically attached to its respective traction wheel.

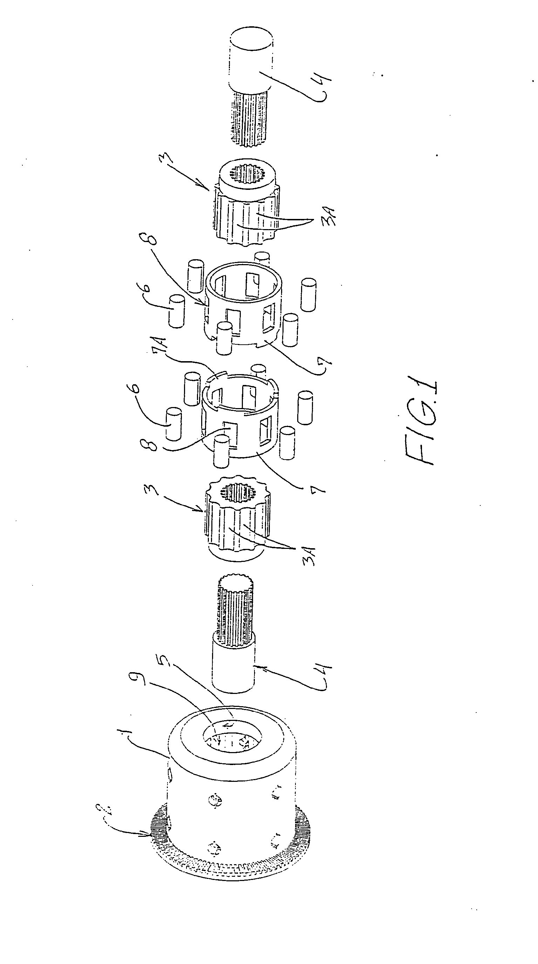

The semi shafts 4 (uniquely and schematically illustrated in Fig. 1) are conventional components and enter the framework 1 of the set through the side apertures 5 provided in the referred framework.

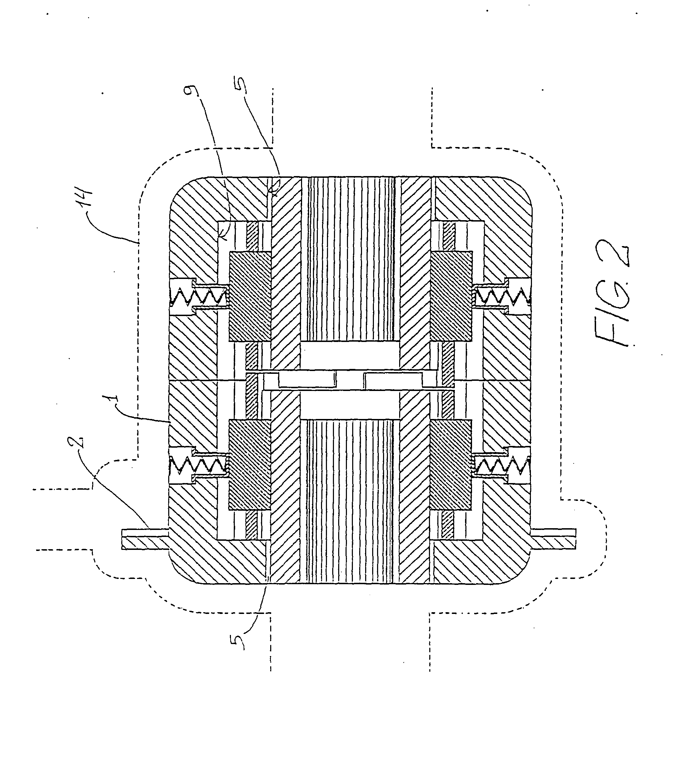

The cubes 3 are aligned in a coaxial fashion inside such framework 1, as can be understood through the observation of Fig. 2, not having a direct mechanical attachment among them.

Each of the cubes 3 receives a set of casters 6, being the set of casters 6 of the two cubes 3 retained between a pair of components named housings 7.

The housings 7 are essentially tubular parts and are assembled around cubes 3 and those receive the oriented assembly of the casters 6.

The housings 7 are provided with respective sets of apertures 8, each one receiving or housing a caster 6.

The housings 7 are also provided with projections of mutual interference 7A incorporated on the edge where one of the housings 7 directly contacts each other.

The outermost tubular framework 1 in its inner wall 9 is provided with a set of longitudinal cavities 10, wherein each of them incorporates a pair of compression devices 11 which operate, each, through a spring 12 and which actuate directly on the casters 6.

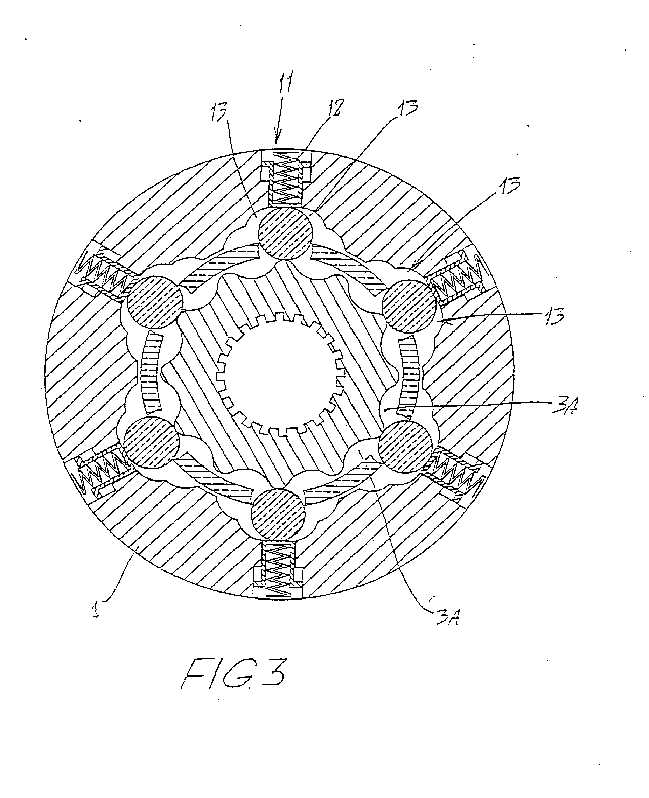

The compression devices 11 are assembled in a radial fashion, as can be seen in Fig. 3, wherein each cavity 10 is provided with at least one pair of said devices, wherein one device 11 actuates on the casters 6 that are assembled in each of the cubes 3.

Each of the longitudinal cavities 10 foreseen in the inner wall 9 of the outermost tubular framework 1 is formed by a profile that is defined by arc sectors 13 arranged before and after concerning the point of actuation of the compression devices 11.

The curvature radius of the arc sectors 13 is dimensioned in function of the diameter measurement of the casters 6 and serves as perfect housing for the same when the vehicle is in motion, as it will be more apparent through the description that will be further provided.

The transmission mechanism for equalized management of the traction force provided for traction wheels of automotive vehicles herein depicted is assembled in an outermost body, such as the schematically indicated by the numeral reference 14 in Fig. 2, as it occurs with a conventional differential, and through said outermost body 14 enters the transmission shaft end that comes from the gear box of the vehicle and where is assembled a pinion gear (not shown), which actuates face wheel 2.

The functioning principle of the transmission mechanism for equalized management of the traction force provided for traction wheels of automotive vehicles in question foresees that the face wheel 2 shall be actuated by the pinion gear (not shown) that is assembled in the transmission shaft end (also not shown), which comes from the gear box of the vehicle, as also occurs with a conventional differential gear.

In the present case there are no planetary gears or pinion gears as in conventional differential gear and following the functioning principle of the transmission mechanism for equalized management of the traction force provided for traction wheels of automotive vehicles herein depicted, the face wheel 2 pivots the outermost framework 1 and the latter drags the casters 6 that are housed in housings 7, which contact the respective arc sectors 13 of the corresponding cavity 10 of the framework and drag cubes 3 that are mechanically attached to the semi shafts of the vehicle.

When the vehicle is transiting in straight line, the turning of the outermost tubular frame work 1 equally transmits traction to both cubes 3 and these to the respective semi shafts that are attached to the vehicle traction wheels, since the casters 6 are contained among cavities 3A of the cubes 3 and the profile of the longitudinal cavities 10.

Still with the vehicle transiting in a straight line, the housings 7 stay relatively statically among each other, and the casters 6 are kept in the same -cavities 3A of the cubes 3 due to the actuation of the compression devices 11.

When the vehicle enters a curve, the effect when the wheel that is outermost at the curve tends to turn at a slightly faster speed due to the equally longer distance covered if compared to the distance covered by the wheel that is innermost at the curve.

At this point, the difference of rotations is initially absorbed by the housings 7 since its interference projections 7A are produced with a gap space, as can be noted in Fig. 1.

When the interference projections 7A of the housing 7 that is assembled in relation to cube 3 connected to the semi shaft 4 that is attached to the wheel that is innermost at the curve contact the projections 7A of the other housing, the casters 6 assembled in this cube are all forced to repel the center of the cube 3 due to the configuration of its cavities, and when it occurs, casters 6 at the same time win the strength of the springs 12 of the respective compression devices 11 and skip to the following cavity 3A of the same cube 3.

The skipping of casters 6 absorbs the difference of rotations generated by the wheels of the vehicle during the curve, once such difference persists (with the vehicle still at a curve), it will generate other moments of skipping and so on until the vehicle enters a straight route again.

Due to its construction form, the transmission mechanism for equalized management of the traction force provided for traction wheels of automotive vehicles herein depicted does not present the inconveniences of the conventional differential gears, mainly when the vehicle, for any reason, loses traction in one of its wheels, and once it occurs the wheel that have lost traction turns freely, only joining the rotation of the wheel it was moving by traction; the same occurs when the vehicle transits with one of the wheels over slippery ground.

From the above, it is clear that the transmission mechanism for equalized management of the traction force provided for traction wheels of automotive vehicles herein depicted presents well marked advantages over the state of the art, thus being perfectly conformable in the nature of the invention priority.

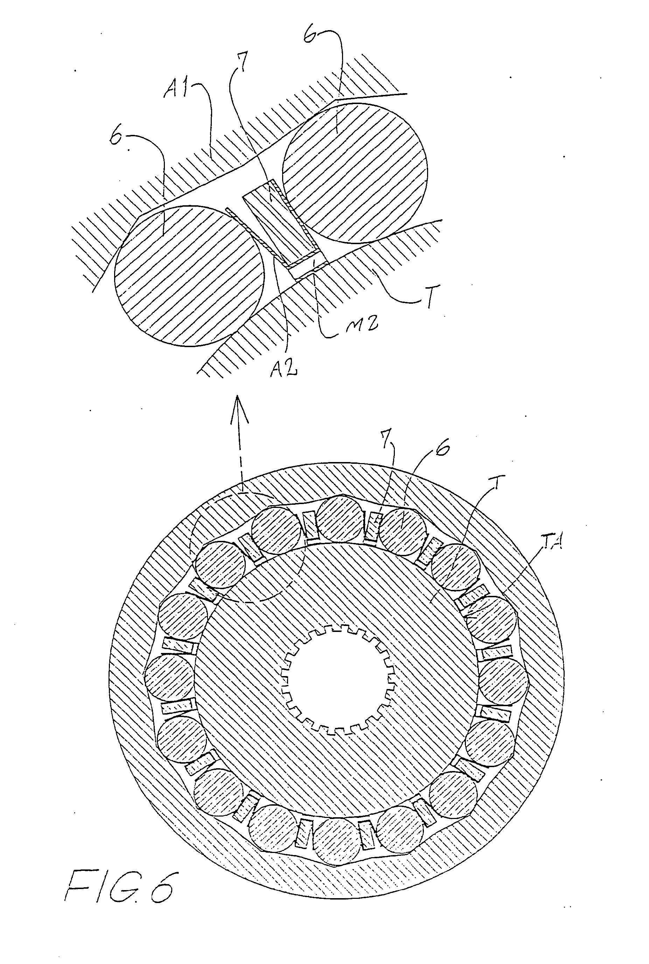

The transmission mechanism for equalized management of the traction force provided for traction wheels of automotive vehicles herein described further presents a constructive variation schematically illustrated in Figs. 6, 7 and 8, wherein it is proposed a version particularly aimed for passenger cars.

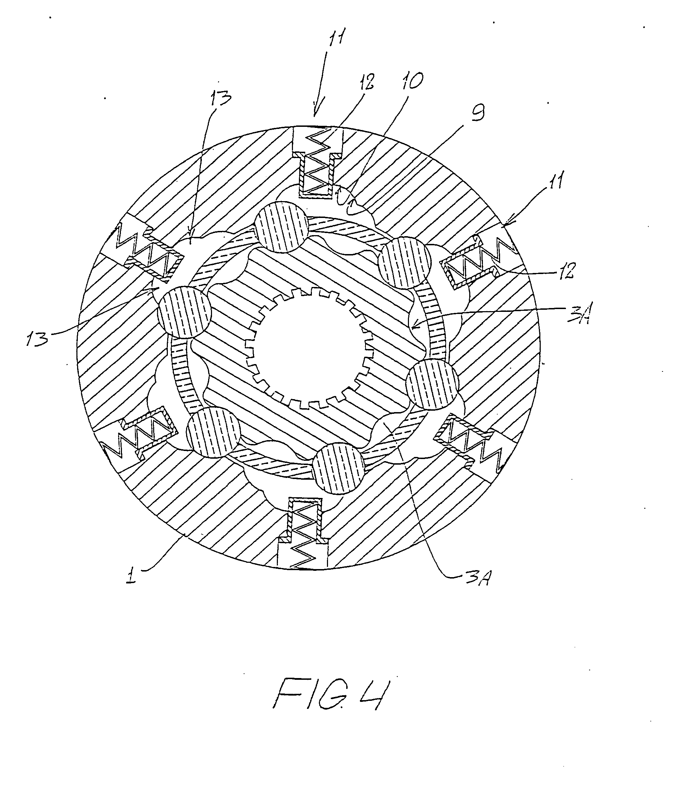

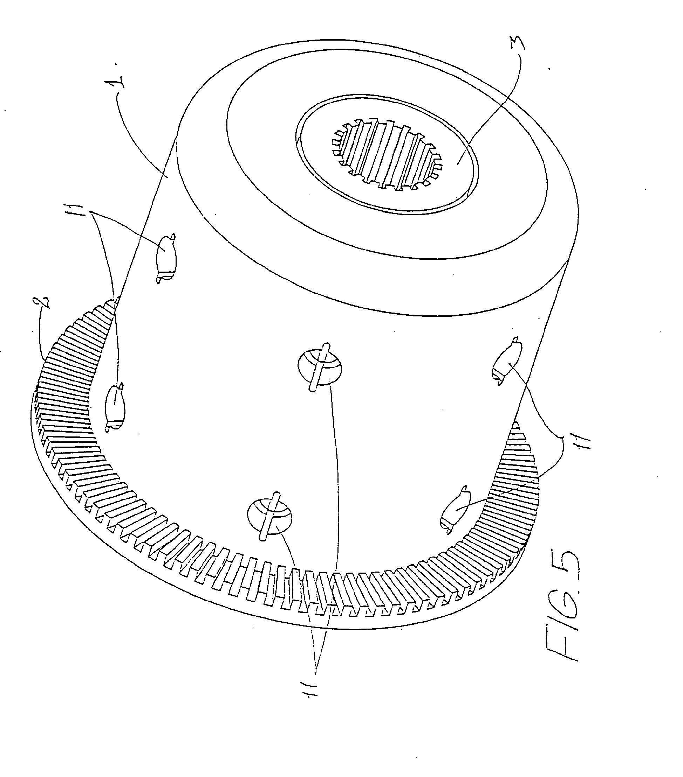

In above described version, a single integral housing is employed, which comprises in a same structure, the portions corresponding to the housings 7 foreseen for the first version. The single housing 7 of the variation in question is sized to cover a great number of casters 6, which thereby run between the outermost tubular framework 1A and the cylindrical cubes T which replace, in this version, the cubes 3 of the main embodiment pictured in Figs. 1 to 5.

The T cubes present its respective surfaces T1 completely smooth and not provided with any type of teeth or rubs, thus allowing a total contact with casters 6.

In the present case, the functioning principle of the proposed transmission mechanism for equalized management of the traction force provided for traction wheels of automotive vehicles is basically the same of the first embodiment, however, it is different since the casters 6 do not have to skip from a stage to another in the cubes 3 (not shown in this version), in the present case, it occurs the friction locking between the inner face of the modified outermost tubular housing 1A, the casters 6 and the single housing 7.

Therefore, with the vehicle in motion in a straight line, both T cubes are mechanically blocked between their respective casters 6, single housing 7 and the corresponding portion of the inner region of the modified outermost tubular framework 1A.

In the version in question it is foreseen an assembly also including a first spring M1 that is housed in a cavity produced in the inner face of each of the walls 7X defining the casters 6 shelters in the single housing 7.

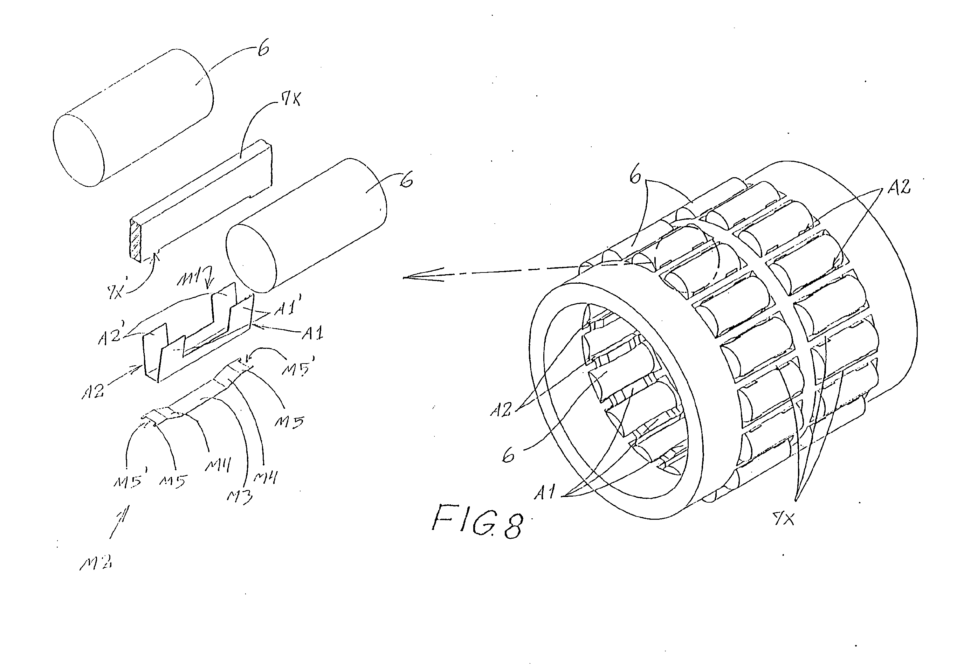

The first spring M1 presents a central region from-which two brims A1 and A2 derive, wherein said brims A1 and A2 are divided each in two contact portions respectively indicated as A1' and A2' keeping direct contact with respective casters 6, as can be better understood by seeing Fig. 8.

Spring M2 presents a essentially more plane embodiment that the one seen in spring M1, however, provided with a series of planes, comprising: a central plane M3, which develops in two planes slightly bended and interposed M4, wherein each of said planes are bended M4 and have continuity in a respective plane brim M5, where a fitting carving M5' is foreseen.

The assembly of the springs M1 and M2 is made so that each spring M1 is-mounted-against the lower face of each of the walls 7X, where a lowering 7X' is foreseen, as can be better understood by seeing Fig. 8.

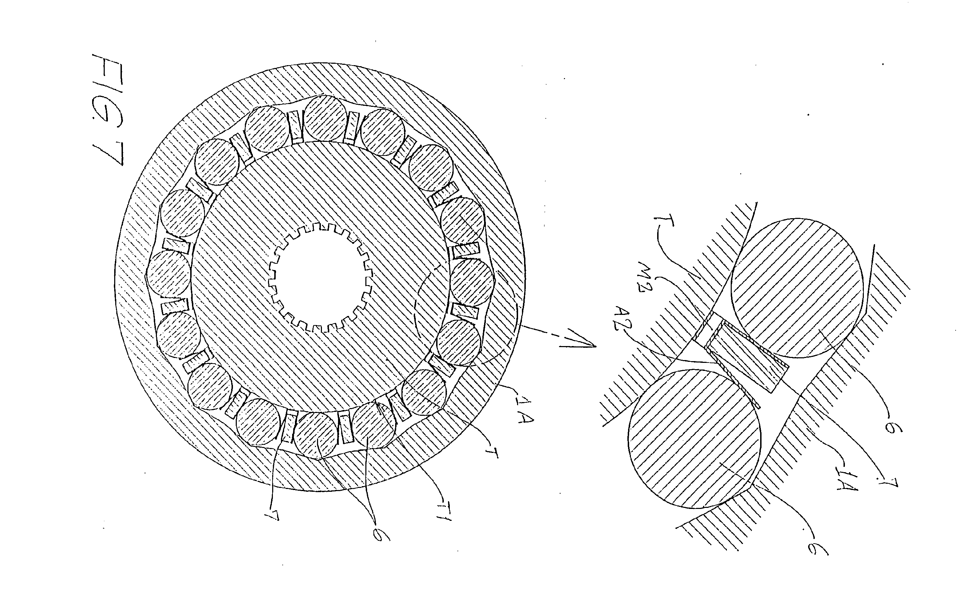

The spring M1 is assembled so that its two brims A1 and A2 are supported against respective casters 6, as can be better seen in Figs. 6 and 7.

The spring M1 is kept in this assembly location by actuating spring M2, which is assembled so as to apply compression force over spring M1, wherein said spring M2 is assembled so that its fitting carvings M5' are retained in the outermost portions of each of the walls 7X, in the remaining region defined in the ends of the lowering 7X'.

The spring M2 is thereby kept in permanent contact with the respective cylindrical T cube, as can be better seen in Figs. 6 and 7.

In general, springs M1 and M2 are for keeping casters 6 in appropriate positioning in relation to the mechanism operation as a whole, wherein springs M1 operate when the vehicle is in frontward or rearward motion, while springs M2 have as function to ensure the correct positioning of springs M1.

When there is a difference of turning between the wheels, e. g. when the vehicle enters a curve, the wheel that is innermost at the curve, which will tend to turn slower, promotes an effect where casters 6 are turned in its shelters, thus allowing this difference of rotations between the vehicle wheels to be balanced.

Differently of the first embodiment, in the present variation, the gearing does not occur through the cavities of the cubes 3, casters 6 and longitudinal cavities 10 of the framework 1, but it occurs through the friction effect and selective locking among the components of the system.

## Claims

1. "TRANSMISSION MECHANISM FOR EQUALIZED MANAGEMENT OF THE TRACTION FORCE PROVIDED FOR TRACTION WHEELS OF AUTOMOTIVE VEHICLES", which is **characterized by** the fact it comprises a outermost tubular framework (1), which is provided with a face wheel (2) assembled on the periphery of one of its lateral ends; internally, the framework (1) receives an assembly of a pair of cubes (3) provided with semicircular cavities (3A) aligned towards its longitudinal axle, each one being mechanically attached to its respective semi shaft (4), which is attached to its respective traction wheel; the semi shafts (4) are components that enter the framework (1) of the set through the side apertures (5) provided in said framework; the cubes (3) are aligned in a coaxial fashion inside the framework (1); each of the cubes (3) receives a set of casters (6), being the set of casters (6) of the two cubes (3) retained between a pair of components named housings (7); housings (7) are essentially tubular parts and are assembled around cubes (3) and those receive the oriented assembly of the casters (6); the housings (7) are provided with the respective sets of apertures (8), each one receiving or housing a caster (6); the housings (7) are also provided with projections of mutual interference (7A) incorporated on the edge where one of the housings (7) directly contacts each other; the outermost tubular framework (1) in its inner wall (9) is provided with a set of longitudinal cavities (10), wherein each of them incorporates a pair of compression devices (11) which operates, each, through a spring (12) and which actuate directly on the casters (6); the compression devices (11) are assembled in a radial fashion, wherein each cavity (10) is provided with at least one pair of said devices, wherein one device (11) actuates on the casters (6) that are assembled in each of the cubes (3); each of the longitudinal cavities (10) foreseen for the inner wall (9) of the outermost tubular framework (1) is formed by a profile that is defined by arc sectors (13) arranged before and after concerning the point of actuation of the compression devices (11); the curvature radius of the arc sectors (13) is dimensioned in function of the diameter measurement of the casters (6) and serves as perfect housing for the same when the vehicle is in motion; the present mechanism is assembled in an outermost body indicated by the numeral reference 14.

2. "TRANSMISSION MECHANISM FOR EQUALIZED MANAGEMENT OF THE TRACTION FORCE PROVIDED FOR TRACTION WHEELS OF AUTOMOTIVE VEHICLES", as claimed in 1, **characterized by** the fact that the transmission mechanism in question foresees that the face wheel (2) shall be actuated by the pinion gear that is assembled in the transmission shaft end, which comes from the gear box of the vehicle, wherein the face wheel (2) pivots the outermost framework (1) and the latter drags the casters (6) that are housed in housings (7), which contact the respective arc sectors (13) of the corresponding cavity (10) of the framework and drag cubes (3) that are mechanically attached to the semi shafts of the vehicle.

3. "TRANSMISSION MECHANISM FOR EQUALIZED MANAGEMENT OF THE TRACTION FORCE PROVIDED FOR TRACTION WHEELS OF AUTOMOTIVE VEHICLES", as claimed in 1 and 2, **characterized by** the fact that when the vehicle is transiting in straight line, the turning of the outermost tubular frame work (1) equally transmits traction to both cubes (3) and these transmit to respective semi shafts that are attached to the vehicle traction wheels, since the casters (6) are contained between cavities (3A) of the cubes (3) and the profile of the longitudinal cavities (10).

4. "TRANSMISSION MECHANISM FOR EQUALIZED MANAGEMENT OF THE TRACTION FORCE PROVIDED FOR TRACTION WHEELS OF AUTOMOTIVE VEHICLES", as claimed in 3, **characterized by** the fact that, with the vehicle transiting in a straight line, the housings (7) stay relatively statically among each other, and the casters (6) are kept in the same cavities (3A) of the cubes (3) due to the actuation of the compression devices (11).

5. "TRANSMISSION MECHANISM FOR EQUALIZED MANAGEMENT OF THE TRACTION FORCE PROVIDED FOR TRACTION WHEELS OF AUTOMOTIVE VEHICLES", as claimed in 1 and 3, **characterized by** the fact that when the vehicle enters a curve, the difference of rotations presented by the vehicle wheels concerning the innermost and outermost sides of the curve is initially absorbed by the housings (7) due to its interference projections (7A) produced with a gap space, wherein when the interference projections (7A) of the housing (7) that is assembled in relation to cube (3) connected to the semi shaft (4) that is attached to the wheel that is innermost at the curve contact the projections (7A) of the other housing, the casters (6) assembled in this cube are all forced to repel the center of the cube (3) due to the configuration of its cavities, and when it occurs, the casters (6), at the same time, win the strength of the springs (12) of said compression devices (11) and skip to the following cavity (3A) of the same cube (3).

6. "TRANSMISSION MECHANISM FOR EQUALIZED MANAGEMENT OF THE TRACTION FORCE PROVIDED FOR TRACTION WHEELS OF AUTOMOTIVE VEHICLES", as claimed in 5, **characterized by** the fact that the skipping of casters (6) absorbs the difference of rotations generated by the wheels of the vehicle during the curve, once such difference persists, it will generate other moments of skipping and so on until the vehicle-enters a straight route again.

7. "TRANSMISSION MECHANISM FOR EQUALIZED MANAGEMENT OF THE TRACTION FORCE PROVIDED FOR TRACTION WHEELS OF AUTOMOTIVE VEHICLES", as claimed in 1, **characterized by** the fact that a version particularly aimed for passenger cars is foreseen, wherein a single integral housing (7) is employed, which comprises in the same structure, the portions corresponding to the housings (7) foreseen for- the first version; the single housing (7) of the variation in question is sized to cover a great number of casters (6), which thereby run between the outermost modified tubular framework (1A) and the cylindrical cubes (T); the cubes (T) present its respective surfaces T1 completely smooth and not provided with any type of teeth or rubs, thus allowing a total contact with casters (6).

8. "TRANSMISSION MECHANISM FOR EQUALIZED MANAGEMENT -OF THE TRACTION FORCE- PROVIDED FOR TRACTION WHEELS OF AUTOMOTIVE VEHICLES", as claimed in 7, **characterized by** the fact that the variation foresees an assembly which includes a first spring (M1) that is housed in a cavity produced in the inner face of each of the walls (7X), defining the shelters of the casters (6) in the single housing (7); the first spring (M1) presents a central region from which two brims (A1) and (A2) derive, wherein said brims (A1) and (A2) are divided each in two contact portions respectively indicated as (A1') and (A2') keeping direct contact with respective casters (6); said assembly further includes the spring (M2), which presents a essentially more plane embodiment that the one seen in spring (M1), however, provided with a series of planes, comprising: a central plane (M3), which develops in two planes slightly bended and interposed (M4), wherein each of said planes are bended (M4) have continuity in a respective plane brim (M5), where a fitting carving (M5') is foreseen.

9. "TRANSMISSION MECHANISM FOR EQUALIZED MANAGEMENT OF THE TRACTION FORCE PROVIDED FOR TRACTION WHEELS OF AUTOMOTIVE VEHICLES", as claimed in 7, **characterized by** the fact that the assembly of the springs (M1) and (M2) is made so that each spring (M1) is mounted against the lower face of each of the walls 7X, where a lowering (7X') is foreseen, wherein the spring (M1) is assembled so that its two brims (A1) and (A2) are supported against respective casters (6); said spring (M1) is kept in this assembly location by actuating spring (M2), which is assembled so as to apply compression force over spring (M1), wherein said spring (M2) is assembled so that its fitting carvings (M5') are retained in the outermost portions of each of the walls (7X), in the remaining region defined in the ends of the lowering (7X'); the spring (M2) is thereby kept in permanent contact with the respective cylindrical cube (T).
